# EUROPEAN PATENT SPECIFICATION

(11) **EP 2 786 936 B1**
(45) Date of publication and mention of the grant of the patent: **03.06.2015**
(21) Application number: 13172495.7
(22) Date of filing: 18.06.2013
(51) Int. Cl.: B64D 13/00, B64D 13/08

(54) **Preventing condensation on environmental control system fluid lines**
Verhinderung der Kondensation auf Flüssigkeitsleitungen eines Umgebungssteuerungssystems
Empêcher la condensation sur des lignes de fluide du système de commande environnemental

(30) Priority: 04.04.2013 US 201313856820
(43) Date of publication of application: 08.10.2014
(73) Proprietor: Bell Helicopter Textron Inc., Fort Worth, TX 76101 (US)
(72) Inventor: Conway, Gary S, Pantego, TX Texas 76013-3277 (US)
(74) Representative: Lawrence, John

(56) References cited:
- EP-A1- 2 487 107
- WO-A1-91/13803
- US-A- 2 427 698
- US-A- 5 327 744
- US-A- 5 699 983
- US-A1- 2012 068 012

## Description

### TECHNICAL FIELD

This invention relates generally to condensation prevention, and more particularly, to preventing condensation on environmental control system fluid lines.

### BACKGROUND

A rotorcraft may include one or more rotor systems. One example of a rotorcraft rotor system is a main rotor system. A main rotor system may generate aerodynamic lift to support the weight of the rotorcraft in flight and thrust to counteract aerodynamic drag and move the rotorcraft in forward flight. Another example of a rotorcraft rotor system is a tail rotor system. A tail rotor system may generate thrust in the same direction as the main rotor system's rotation to counter the torque effect created by the main rotor system.

Some rotorcraft include environmental control systems, on the fluid lines of which condensation may form. A prior art anti-condensation method and device is described in EP2487107.

### SUMMARY

The features comprised in device claims 1 to 10 and method claims 11 to 14 may provide one or more technical advantages. A technical advantage of one embodiment may include the capability to prevent condensation from forming on ECS fluid lines by managing the surface temperature of the ECS fluid lines. A technical advantage of one embodiment may also include the capability to prevent condensation from forming on ECS fluid lines even when the ECS fluid lines are exposed to warm, humid environments for extended periods of time. A technical advantage of one embodiment may also include the capability to provide dynamic insulation to the ECS fluid lines that changes based on the dew point temperature of the outside environment. A technical advantage of one embodiment may also include the capability to optimize ECS efficiency by adjusting the insulation provided to the ECS fluid lines.

Certain embodiments of the present disclosure may include some, all, or none of the above advantages. One or more other technical advantages may be readily apparent to those skilled in the art from the figures, descriptions, and claims included herein.

### BRIEF DESCRIPTION OF THE DRAWINGS

To provide a more complete understanding of the present invention and the features and advantages thereof, reference is made to the following description taken in conjunction with the accompanying drawings, in which:
**FIGURE 1A** shows a rotorcraft according to one example embodiment;
**FIGURE 1B** shows a control system and a fluid system according to one example embodiment;
**FIGURE 2** shows one example of the control system of FIGURE 1B;
**FIGURE 3A** shows one example of the fluid system of FIGURE 1B;
**FIGURE 3B** shows one example of an anti-condensation section of the fluid system of FIGURE 3A; and
**FIGURE 4** shows an example method for controlling condensation on a fluid line.

### DETAILED DESCRIPTION OF THE DRAWINGS

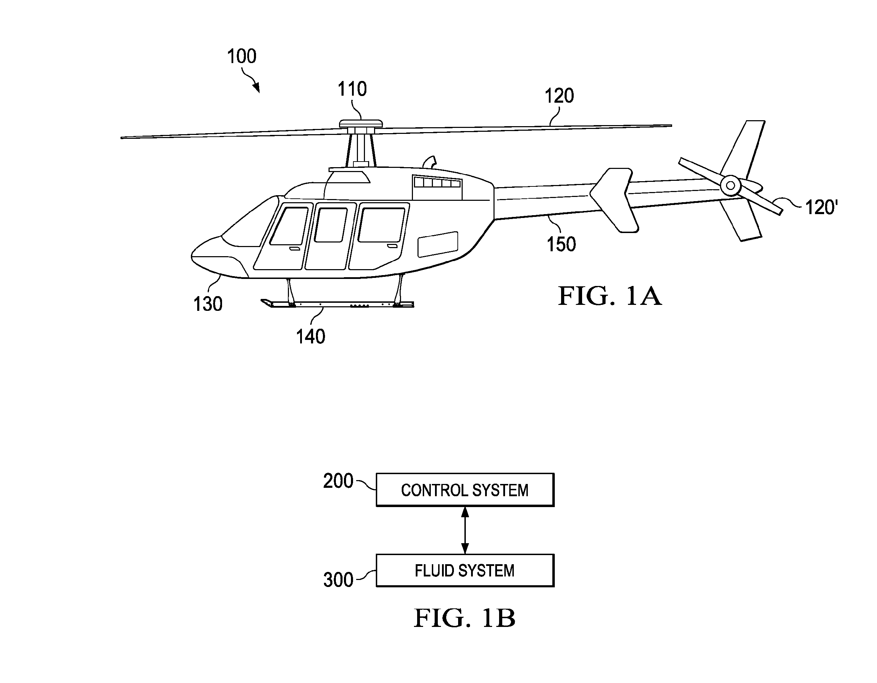

FIGURE 1A shows a rotorcraft 100 according to one example embodiment. Rotorcraft 100 features a rotor system 110, blades 120, a fuselage 130, a landing gear 140, and an empennage 150. Rotor system 110 may rotate blades 120. Rotor system 110 may include a control system for selectively controlling the pitch of each blade 120 in order to selectively control direction, thrust, and lift of rotorcraft 100. Fuselage 130 represents the main body of rotorcraft 100 and may be coupled to rotor system 110 such that rotor system 110 and blades 120 may move fuselage 130 through the air. Landing gear 140 supports rotorcraft 100 when rotorcraft 100 is landing and/or when rotorcraft 100 is at rest on the ground. Empennage 150 represents the tail section of the aircraft and features components of a rotor system 110 and blades 120'. Blades 120' may provide thrust in the same direction as the rotation of blades 120 so as to counter the torque effect created by rotor system 110 and blades 120. Teachings of certain embodiments relating to rotor systems described herein may apply to rotor system 110 and/or other rotor systems, such as other tilt rotor and helicopter rotor systems. It should also be appreciated that teachings from rotorcraft 100 may apply to aircraft other than rotorcraft, such as airplanes and unmanned aircraft, to name a few examples.

Rotorcraft 100, like other aircraft, may include a climate-controlled interior. For example, an environmental control system (ECS) may provide an aircraft with air supply, thermal control, and cabin pressurization for crew and passengers. An ECS may include the capability, for example, to provide cold air using an air conditioning system, such as an air cycle machine or a vapor-compression refrigeration system.

In some examples, an ECS may include fluid lines that allow refrigerant to flow through the ECS. A refrigerant may include any fluid used in an ECS to provide thermal control. In an air cycle machine, for example, the air itself may act as a refrigerant. Other example refrigerants may include, but are not limited to, fluorocarbons, ammonia, sulfur dioxide, and non-halogenated hydrocarbons.

The refrigerant may be considered a relatively cold and dry fluid. Accordingly, condensation may form on the fluid line, for example, if the fluid line is subject to a warmer and/or more humid environment. In some aircraft, however, condensation can cause serious problems. For example, an aircraft may include ECS fluid lines in close proximity to aircraft avionics or other electrical equipment. In this example, moisture from ECS fluid lines can cause such electrical equipment to fail.

Certain environments may be more likely to cause condensation on the fluid lines of an ECS. For example, condensation may be more likely to form on ECS fluid lines when the aircraft is on the ground than when the aircraft is flying at altitude because the environment is typically cooler and less humid at altitude. As another example, condensation may be more likely to form in tropical or coastal environments where the environment is warmer and more humid.

Therefore, fluid line condensation may be prevented, for example, by limiting ECS operation in warmer and more humid environments. In addition, insulation may be provided in an effort to thermally separate the ECS fluid lines from the outside environment.

In some scenarios, however, basic insulation may not be sufficient. For example, an aircraft such as rotorcraft 100 may be parked on a landing pad near the Texas Gulf Coast (a typically warm and humid environment) waiting for passengers. In an effort to improve pilot and passenger comfort, the pilot may turn on the ECS air condition system to cool the interior of the aircraft. As the aircraft waits for the passengers, however, the fluid lines are subject to the warm, humid outside environment, and condensation may begin to form (even if basic insulation is provided).

Accordingly, teachings of certain embodiments recognize the capability to prevent condensation from forming on ECS fluid lines even when the ECS fluid lines are exposed to warm, humid environments for extended periods of time. For example, teachings of certain embodiments recognize the capability to provide dynamic insulation to the ECS fluid lines that changes based on the dew point temperature of the outside environment. Teachings of certain embodiments also recognize the capability to optimize ECS efficiency by adjusting the insulation provided to the ECS fluid lines.

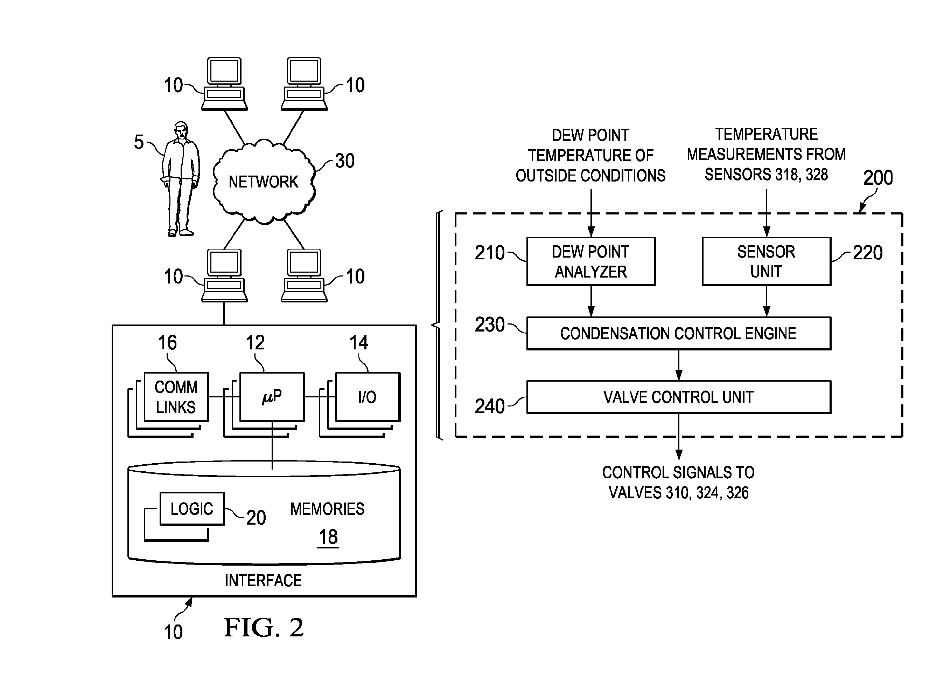

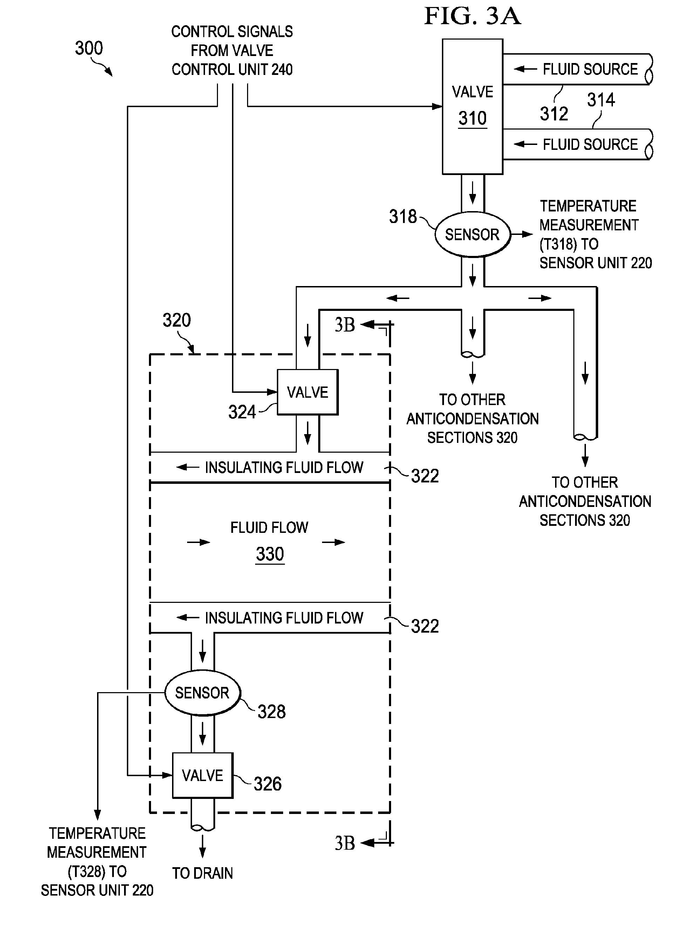

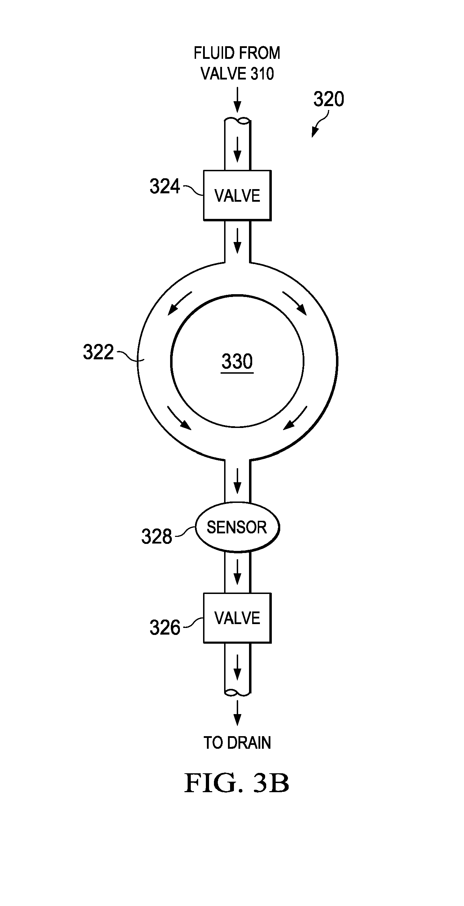

FIGURE 1B shows a control system 200 and a fluid system 300 according to one example embodiment. In operation, according to some embodiments, control system 200 may instruct fluid system 300 as how to provide insulating fluid around an ECS fluid line. Control system 200 and fluid system 300 are described in greater detail with regard to FIGURES 2, 3A, and 3B. Although some of the examples described herein refer to an ECS installed on rotorcraft 100, teachings of certain embodiments recognize the capability of control system 200 and/or fluid system 300 to prevent condensation in a variety of other scenarios.

FIGURE 2 shows control system 200 according to one example embodiment. In the example of FIGURE 2, system 200 features a dew point analyzer 210, a sensor unit 220, a condensation control engine 230, and a valve control unit 240, that may be implemented at least partially by one or more computer systems 10. All, some, or none of the components of system 200 may be located on or near rotorcraft 100 (or another aircraft).

Users 5 may access system 200 through computer systems 10. For example, in some embodiments, users 5 may access condensation control engine 230, which may be at least partially associated with a computer system 10. Users 5 may include any individual, group of individuals, entity, machine, and/or mechanism that interacts with computer systems 10. Examples of users 5 include, but are not limited to, a pilot, service person, engineer, technician, contractor, agent, and/or employee. Users 5 may be associated with an organization. An organization may include any social arrangement that pursues collective goals. One example of an organization is a business. A business is an organization designed to provide goods or services, or both, to consumers, governmental entities, and/or other businesses.

Computer system 10 may include processors 12, input/output devices 14, communications links 16, and memory 18. In other embodiments, computer system 10 may include more, less, or other components. Computer system 10 may be operable to perform one or more operations of various embodiments. Although the embodiment shown provides one example of computer system 10 that may be used with other embodiments, such other embodiments may utilize computers other than computer system 10. Additionally, embodiments may also employ multiple computer systems 10 or other computers networked together in one or more public and/or private computer networks, such as one or more networks 30.

Processors 12 represent devices operable to execute logic contained within a medium. Examples of processor 12 include one or more microprocessors, one or more applications, and/or other logic. In one example embodiment, processor 12 is a 386 processor. Computer system 10 may include one or multiple processors 12.

Input/output devices 14 may include any device or interface operable to enable communication between computer system 10 and external components, including communication with a user or another system. Example input/output devices 14 may include, but are not limited to, a mouse, keyboard, display, and printer.

Network interfaces 16 are operable to facilitate communication between computer system 10 and another element of a network, such as other computer systems 10. Network interfaces 16 may connect to any number and combination of wireline and/or wireless networks suitable for data transmission, including transmission of communications. Network interfaces 16 may, for example, communicate audio and/or video signals, messages, internet protocol packets, frame relay frames, asynchronous transfer mode cells, and/or other suitable data between network addresses. Network interfaces 16 connect to a computer network or a variety of other communicative platforms including, but not limited to, a public switched telephone network (PSTN); a public or private data network; one or more intranets; a local area network (LAN); a metropolitan area network (MAN); a wide area network (WAN); a wireline or wireless network; a local, regional, or global communication network; an optical network; a satellite network; a cellular network; an enterprise intranet; all or a portion of the Internet; other suitable network interfaces; or any combination of the preceding.

Memory 18 represents any suitable storage mechanism and may store any data for use by computer system 10. Memory 18 may comprise one or more tangible, computer-readable, and/or computer-executable storage medium. Examples of memory 18 include computer memory (for example, Random Access Memory (RAM) or Read Only Memory (ROM)), mass storage media (for example, a hard disk), removable storage media (for example, a Compact Disk (CD) or a Digital Video Disk (DVD)), database and/or network storage (for example, a server), and/or other computer-readable medium.

In some embodiments, memory 18 stores logic 20. Logic 20 facilitates operation of computer system 10. Logic 20 may include hardware, software, and/or other logic. Logic 20 may be encoded in one or more tangible, non-transitory media and may perform operations when executed by a computer. Logic 20 may include a computer program, software, computer executable instructions, and/or instructions capable of being executed by computer system 10. Example logic 20 may include any of the well-known OS2, UNIX, Mac-OS, Linux, and Windows Operating Systems or other operating systems. In particular embodiments, the operations of the embodiments may be performed by one or more computer readable media storing, embodied with, and/or encoded with a computer program and/or having a stored and/or an encoded computer program. Logic 20 may also be embedded within any other suitable medium without departing from the scope of the invention.

Various communications between computers 10 or components of computers 10 may occur across a network, such as network 30. Network 30 may represent any number and combination of wireline and/or wireless networks suitable for data transmission. Network 30 may, for example, communicate internet protocol packets, frame relay frames, asynchronous transfer mode cells, and/or other suitable data between network addresses. Network 30 may include a public or private data network; one or more intranets; a local area network (LAN); a metropolitan area network (MAN); a wide area network (WAN); a wireline or wireless network; a local, regional, or global communication network; an optical network; a satellite network; a cellular network; an enterprise intranet; all or a portion of the Internet; other suitable communication links; or any combination of the preceding. Although the illustrated embodiment shows one network 30, teachings of certain embodiments recognize that more or fewer networks may be used and that not all elements may communicate via a network. Teachings of certain embodiments also recognize that communications over a network is one example of a mechanism for communicating between parties, and any suitable mechanism may be used.

Dew point analyzer 210 may measure the dew point temperature of outside conditions and/or measure other values that may be used to calculate the dew point temperature of outside conditions. The outside conditions may refer to any conditions outside the fluid lines, such as conditions outside the aircraft or conditions inside the aircraft but outside the fluid lines. In some embodiments, control system 200 may include multiple dew point analyzers 210. For example, in one embodiment, control system 200 may include a dew point analyzer 210 local to each anti-condensation section 320 of fluid system 300.

The dew point temperature may generally refer to the temperature below which the water vapor in a volume of humid air at a given barometric pressure will condense into liquid water at the same rate at which it evaporates. The dew point temperature may be generally described as a water-to-air saturation temperature and may be associated with relative humidity. A high relative humidity indicates that the dew point temperature is closer to the current air temperature. A relative humidity of one hundred percent, for example, may indicate that the dew point temperature is equal to the current temperature and that the air is maximally saturated with water.

Sensor unit 220 may receive temperature measurements and/or other measurements from sensors within fluid system 300. In the example of FIGURES 2 and 3A, sensor unit 220 receives temperature measurements T318 and T328 from sensors 318 and 328.

Condensation control engine 230 determines operating temperatures for fluid system 300 based on inputs provided by dew point analyzer 210 and sensor unit 220. Valve control unit 240 sends control signals to fluid valves within fluid system 300 to adjust the fluid flow within fluid system 300 based on the operating temperatures determined by condensation control engine 230. In the example of FIGURES 2 and 3A, valve control unit 240 may send control signals to valves 310, 324, and/or 326.

FIGURE 3A shows fluid system 300 according to one example embodiment. In the example of FIGURE 3A, fluid system 300 features a valve 310, sensor 318, and anti-condensation sections 320. In this example, each anti-condensation section 320 features an insulation chamber 322, valves 324 and 326, and sensor 328. A cross-section view of an anti-condensation section 320 is shown in FIGURE 3B. In operation, according to one example embodiment, fluid system 300 provides fluid through insulation chamber 322, which surrounds and insulates ECS fluid line 330.

In the example of FIGURE 3A, valve 310 receives fluid from fluid sources 312 and 314. In other embodiments, however, valve 310 may receive fluid from more or fewer fluid sources. In one example embodiment, valve 310 is a mixing valve that mixes fluid received from fluid sources 312 and 314 and provides the mixed fluid to anti-condensation sections 320. In the example of FIGURE 3A, valve 310 receives fluid from two fluid sources 312 and 314. In one example embodiment, fluid source 312 may represent cold air provided by the ECS, and fluid source 314 may represent hot "bleed" air provided by the power train of rotorcraft 100. Teachings of certain embodiments recognize that mixing cold air provided by the ECS and hot "bleed" air provided by the power train may improve efficiency of operating fluid system 300. Hot "bleed" air, for example, may be in abundant supply and thus essentially "free" to use in fluid system 300.

Sensor 318 measures the temperature (T318) of fluid provided by valve 310. Sensor 318 may measure T318 by measuring, for example, the outside surface temperature of the duct adjacent valve 310.

In the example of FIGURES 2 and 3A, sensor 318 may provide temperature T318 to sensor unit 220. In some embodiments, control system 200 may use temperature T318 to provide instructions to valve 310. For example, condensation control engine 230 may determine a preferred operating temperature for fluid exiting valve 310 (temperature T318). For instance, condensation control engine 230 may determine that T318 should exceed the outside dew point temperature or exceed the sum of the outside dew point temperature plus a margin value (e.g., eight degrees). In this example, valve control unit 240 may instruct valve 310 to mix fluid from fluid sources 312 and 314 at a ratio such that the mixed fluid is at the preferred operating temperature T318. In some embodiments, this may be an iterative process. For example, valve 310 may mix incoming fluids at a certain ratio of hot-to-cold fluid and then adjust the ratio to change temperature T318.

Each anti-condensation section 320 may receive mixed fluid from valve 310. In the example of FIGURES 3A and 3B, each anti-condensation section 320 features an insulation chamber 322. Insulation chamber 322 at least partially separates ECS fluid line 330 from the outside environment. In the example of FIGURE 3B, for example, insulation chamber 322 surrounds ECS fluid line 330. In some embodiments, ECS fluid line 330 resides within insulation chamber 322 such that the fluid flowing through insulation chamber 322 may contact the outer surface of ECS fluid line 330. For example, insulation chamber 322 and ECS fluid line 330 may, in combination, represent a double-walled ECS fluid line, with insulating fluid flowing in the outer ECS fluid line chamber. In other embodiments, fluid flowing through insulation chamber 322 may be separated from the outer surface of ECS fluid line 330. Insulation chamber 322 may be sealed, unsealed, or partially sealed.

In the example of FIGURES 3A and 3B, each anti-condensation section 320 is equipped with valves 324 and 326. Valve 324 may represent, for example, a flowmeter valve having a modulated width that may meter the incoming flow of mixed fluid into insulation chamber 322. Valve 326 may represent, for example, a check valve.

The example anti-condensation section 320 of FIGURES 3A and 3B also features sensor 328. Sensor 328 measures the temperature (T328) of fluid exiting insulation chamber 322. Sensor 328 may measure T328 by measuring, for example, the outside surface temperature of the duct adjacent the exit of insulation chamber 322.

In the example of FIGURES 2, 3A, and 3B, sensor 328 may provide temperature T328 to sensor unit 220. In some embodiments, control system 200 may use temperature T328 to provide instructions to valve 324. For example, condensation control engine 230 may determine a preferred operating temperature for fluid exiting insulation chamber 322 (temperature T328). For instance, condensation control engine 230 may determine that T328 should exceed the outside dew point temperature or exceed the sum of the outside dew point temperature plus a margin value (e.g., four degrees). In this example, valve control unit 240 may instruct valve 324 to meter fluid incoming into insulation chamber 322 such that fluid exiting insulation chamber 322 is at the preferred operating temperature T328. In some embodiments, this may be an iterative process. For example, valve 324 may provide incoming fluids at a certain temperature and then adjust the incoming temperature in an effort to adjust the outgoing temperature T328.

As stated above, fluid system 300 may include multiple anti-condensation sections 320. For example, in some embodiments, the ECS may include a second fluid line, and fluid system 300 may include a second anti-condensation section 320 operable to prevent condensation from forming on the second fluid line. In some embodiments, this second fluid line may connected to and/or contiguous with the first fluid line 330. For example, the first and second fluid lines may represent two sections of the same pipe. In these examples, the second anti-condensation section 320 may feature its own valve 324 that provides a different volume of fluid than the valve 324 associated with the first anti-condensation section 320. Teachings of certain embodiments recognize that breaking up the ECS fluid lines into multiple sections may improve efficiency and effectiveness of fluid system 300.

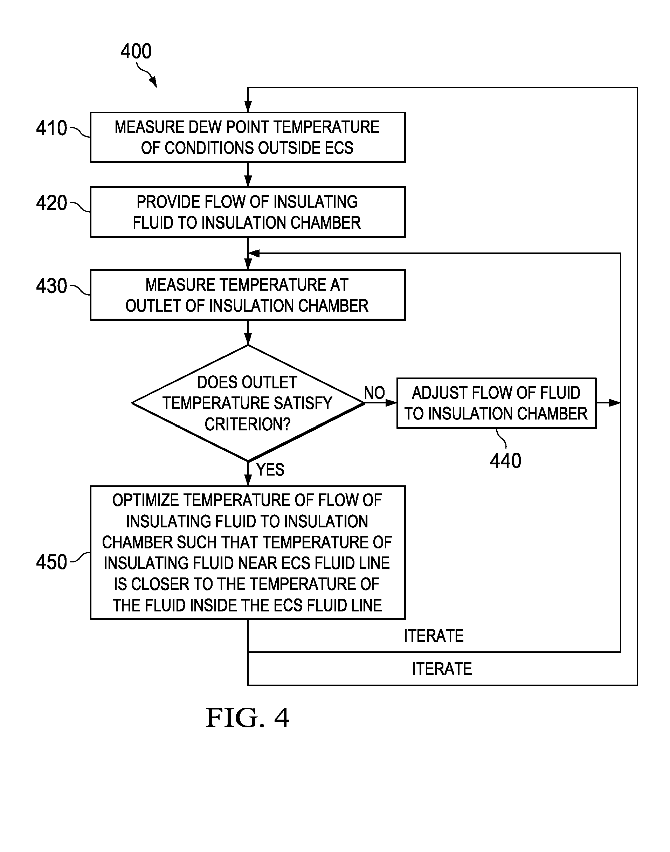

FIGURE 4 shows a method 400 of controlling condensation in an ECS according to one example embodiment. At step 410, dew point analyzer 410 may measure the dew point temperature of conditions outside the ECS. In some embodiments, the method may end at step 410 if, for example, the outside dew point temperature is sufficiently less than the temperature of the ECS fluid. Otherwise, method 400 may proceed to step 420.

At step 420, fluid system 300 may provide a flow of insulating fluid to insulation chamber 322 at least partially separating ECS fluid line 330 from environmental conditions outside the ECS. The environmental conditions referred to in step 420 may the same as or different from the environmental conditions measured in step 410.

The initial flow of fluid to insulation chamber 322 may be provided at an initial temperature. In some embodiments, this initial temperature may be set based on operations of fluid system 300. In some embodiments, this initial temperature may be set based on the dew point temperature (e.g., dew point temperature plus a margin value of twenty degrees). In some embodiments, this initial temperature is not controlled by control system 200 (e.g., valve 310 is open to all fluid sources until control system 200 receives temperature measurements from sensors 318 and 328 and adjusts the desired T318).

The temperature of the insulating fluid exiting insulation chamber 322 is measured at step 430. Teachings of certain embodiments recognize that measuring the temperature of the insulating fluid exiting insulation chamber 322 may represent an approximation of the temperature of the insulating fluid in insulation chamber 322.

The outlet temperature of the insulating fluid is then compared to at least one criterion. The outlet temperature may satisfy the criterion if, for example, the outlet temperature is greater than the dew point temperature measurement or greater than the dew point temperature measurement plus a margin value (e.g., four degrees). If the criterion is not satisfied, then the flow of insulating fluid to insulation chamber 322 is adjusted at step 440. For example, if the outlet temperature is too low, then the flow of insulating fluid to insulation chamber 322 may be adjusted by providing more hot fluid and less cold fluid to insulation chamber 322.

If the outlet temperature of the insulating fluid satisfied the criterion, then the flow of insulating fluid to insulation chamber 322 may be further optimized at step 450 such that the temperature of the insulating fluid near the ECS fluid line is closer to the temperature of the fluid inside the ECS fluid line. In some embodiments, the temperature of the insulating fluid near the ECS fluid line is approximated by measuring the temperature of the insulating fluid entering or exiting insulation chamber 322.

After optimizing the temperature of the flow of insulating fluid to insulation chamber 322, method 400 may end. In some embodiments, however, method 400 may iterate by returning to a previous step, such as step 410 or step 430. Teachings of certain embodiments recognize that iterating method 400 may allow for additional flow temperature adjustments based on changes in environmental dew point temperature, ECS fluid temperature, and/or other changes.

Modifications, additions, or omissions may be made to the systems and apparatuses described herein without departing from the scope of the invention. The components of the systems and apparatuses may be integrated or separated. Moreover, the operations of the systems and apparatuses may be performed by more, fewer, or other components. The methods may include more, fewer, or other steps. Additionally, steps may be performed in any suitable order.

Although several embodiments have been illustrated and described in detail, it will be recognized that substitutions and alterations are possible without departing from the spirit and scope of the present invention, as defined by the appended claims.

To aid the Patent Office, and any readers of any patent issued on this application in interpreting the claims appended hereto, applicants wish to note that they do not intend any of the appended claims to invoke paragraph 6 of 35 U.S.C. § 112 as it exists on the date of filing hereof unless the words "means for" or "step for" are explicitly used in the particular claim.

## Claims

1. A condensation control system (200)comprising:
a dew point analyzer (210) operable to provide a dew point temperature measurement of environmental conditions outside a fluid line (330) having a refrigerant flowing therein;
a fluid system (300) operable to provide a flow of insulating fluid to an insulation chamber (322) at least partially separating the fluid line (330) from environmental conditions outside the fluid line; and
a condensation control engine (230) operable to instruct the fluid system (300) to provide the flow of insulating fluid to the insulation chamber (322) at a temperature such that the temperature of the insulating fluid exiting the insulation chamber is greater than the dew point temperature measurement.

2. A rotorcraft (100), comprising:
a body (130);
a power train coupled to the body and comprising a power source and a drive shaft coupled to the power source;
a main rotor system (110) coupled to the power train, the main rotor system comprising at least one main rotor blade (120)
a hub;
a rotor blade (120) coupled to the hub;
an environmental control system (ECS) coupled to the body and comprising a fluid line (330) and a refrigerant flowing through the fluid line; and
a condensation control system (200) according to claim 1.

3. The rotorcraft of Claim 2 or the system of Claim 1, wherein the condensation control engine (230) is operable to instruct the fluid system to provide the flow of insulating fluid to the insulation chamber (322) at a temperature such that the temperature of the insulating fluid exiting the insulation chamber is greater than the dew point temperature measurement plus a margin value.

4. The rotorcraft of any preceding rotorcraft Claim, or the system of any preceding system Claim, wherein the condensation control engine (230) is further operable to instruct the fluid system to lower the temperature of the provided flow of insulating fluid such that:
i) The temperature of the provided flow of insulating fluid is closer to the temperature of the refrigerant and;
ii) The provided flow of insulating fluid is still at a temperature such that the temperature of the insulating fluid exiting the insulation chamber is greater than the dew point temperature measurement; wherein the temperature of the provided flow of insulating fluid is optionally or preferably the temperature of the insulating fluid exiting the insulation chamber.

5. The rotorcraft of any preceding rotorcraft Claim wherein:
the ECS further comprises a second fluid line (330) and a refrigerant flowing through the second fluid line;
the fluid system is further operable to provide a flow of insulating fluid to a second insulating chamber (322) at least partially separating the second fluid line from environmental conditions outside the ECS; and
the condensation control engine (230) is further operable to instruct the fluid system to provide the flow of insulating fluid to the second insulation chamber at a temperature such that the temperature of the flow of insulating fluid exiting the second insulation chamber is greater than the dew point temperature measurement,

6. The rotorcraft of Claim 5, the fluid system further comprising:
a first valve (310) operable to provide a flow of insulating fluid at a temperature greater than the dew point temperature measurement;
a second valve (324) operable to receive at least part of the flow of insulating fluid from the first valve and provide at least part of the received flow to the insulation chamber at a temperature such that the temperature of the insulating fluid exiting the insulation chamber is greater than the dew point temperature measurement; and
a third valve operable to receive at least part of the flow of insulating fluid from the first valve and provide at least part of the received flow to the second insulation chamber at a temperature such that the temperature of the insulating fluid exiting the second insulation chamber is greater than the dew point temperature measurement.

7. The rotorcraft of Claim 6, wherein the first valve (310) is operable to provide the flow of insulating fluid at a temperature greater than the dew point temperature measurement plus a first margin value; and/or wherein the second valve is operable to provide at least part of the received flow to the insulation chamber at a temperature such that the temperature of the insulating fluid exiting the insulation chamber is greater than the dew point temperature measurement plus a second margin value, the second margin value less than the first margin value.

8. The rotorcraft of any preceding rotorcraft Claim, or the system of any preceding system Claim, wherein the fluid system is operable to provide the flow of insulating fluid by:
receiving a first fluid from a first fluid source (312) at a first temperature;
receiving a second fluid from a second fluid source (314) at a second temperature greater than the first temperature; and
mixing at least part of the first fluid and the second fluid such that the temperature of the mixed fluid satisfies the instructions provided by the condensation control engine.

9. The rotorcraft of Claim 8, wherein the first fluid source (312) is the ECS; and/or the second fluid source (314) is the power train

10. The rotorcraft of any preceding rotorcraft Claim, or the system of any preceding system Claim, wherein the refrigerant is air.

11. A method of controlling condensation in an environmental control system (ECS), the ECS comprising a fluid line and a refrigerant flowing through the fluid line, the method comprising:
measuring (410) a dew point temperature of environmental conditions outside the ECS;
providing (420) a flow of insulating fluid to an insulation chamber at least partially separating the fluid line from environmental conditions outside the ECS;
measuring (430) a temperature of the insulating fluid exiting the insulation chamber; and
adjusting (440), if the temperature of the insulating fluid exiting the insulation chamber is not greater than the dew point temperature measurement, a temperature of the insulation fluid provided to the insulation chamber such that the temperature of the insulating fluid exiting the insulation chamber is greater than the dew point temperature measurement.

12. The method of Claim 11, wherein adjusting the temperature of the insulation fluid provided to the insulation chamber comprises adjusting, if the temperature of the insulating fluid exiting the insulation chamber is not greater than the dew point temperature measurement plus a margin value, the temperature of the insulation fluid provided to the insulation chamber such that the temperature of the insulating fluid exiting the insulation chamber is greater than the dew point temperature measurement plus a margin value.

13. The method of Claim 11 or 12, further comprising lowering the temperature of the provided flow of insulating fluid such that:
i) The temperature of the insulating fluid exiting the insulation chamber is closer to the temperature of the refrigerant and;
ii) The provided flow of insulating fluid is still at a temperature such that the temperature of the insulating fluid exiting the insulation chamber is greater than the dew point temperature measurement.

14. The method of Claim 13, wherein the provided flow of insulating fluid is still at a temperature such that the temperature of the insulating fluid exiting the insulation chamber is greater than the dew point temperature measurement plus a margin value.

## Patentansprüche

1. Ein Kondensationssteuerungssystem (200) bestehend aus:
einem Taupunktanalysator (210), der eine Taupunkt-Temperaturmessung der Umgebungsbedingungen außerhalb einer Flüssigkeitsleitung (330), in der ein Kühlmittel fließt, liefert;
einem Flüssigkeitssystem (300), das einen Zufluss von Isolierflüssigkeit in eine Isolationskammer (322) bereitstellt, und mindestens teilweise die Flüssigkeitsleitung (330) von den Umgebungsbedingungen außerhalb der Flüssigkeitsleitung trennt; und
einem Kondensationsteuerungsmotor (230), der dem Flüssigkeitssystem (300) angibt, den Zufluss an Isolierflüssigkeit in die Isolationskammer (322) bei einer bestimmten Temperatur einzuleiten, so dass die Temperatur der Isolierflüssigkeit, die die Isolationskammer verlässt, höher ist als die Taupunkt-Temperaturmessung.

2. Ein Drehflügler (100), bestehend aus:
einem Rumpf (130);
einem am Rumpf befestigten Antriebssystem, bestehend aus einem Antriebsaggregat und einer Antriebswelle, die mit dem Antriebsaggregat verbunden ist;
einem Hauptrotorsystem (110), das mit dem Antriebssystem verbunden ist, das Hauptrotorsystem bestehend aus mindestens einem Hauptrotorblatt (120);
einem Drehkreuz;
einem Rotorblatt (120), das an das Drehkreuz gekoppelt ist;
einem Umgebungssteuerungssystem (ECS), das mit dem Rumpf verbunden ist und aus einer Flüssigkeitsleitung (330) und einem Kühlmittel besteht, das durch die Flüssigkeitsleitung fließt; und
einem Kondensationssteuerungssystem (200) gemäß Anspruch 1.

3. Der Drehflügler nach Anspruch 2 oder das System in Anspruch 1, wobei der Kondensationsteuerungsmotor (230) dem Flüssigkeitssystem angibt, den Zufluss der Isolierflüssigkeit in die Isolationskammer (322) bei einer bestimmten Temperatur einzuleiten, so dass die Temperatur der Isolierflüssigkeit, die die Isolationskammer verlässt, höher ist als die Taupunkt-Temperaturmessung, plus eines Toleranzwertes.

4. Der Drehflügler eines der vorhergehenden Drehflügler-Ansprüche oder das System eines der vorhergehenden System-Ansprüche, wobei der Kondensationssteuerungsmotor (230) darüberhinaus dem Flüssigkeitssystem angeben kann, die Temperatur des bereitgestellten Isolierflüssigkeitszuflusses zu senken, so dass:
i) die Temperatur des bereitgestellten Zuflusses an Isolierflüssigkeit näher bei der Temperatur der Kühlflüssigkeit liegt und;
ii) der bereitgestellte Zufluss an Isolierflüssigkeit immer noch bei einer bestimmten Temperatur liegt, so dass die Temperatur der Isolierflüssigkeit, die die Isolationskammer verlässt, höher ist, als die Taupunkt-Temperaturmessung; wobei die Temperatur des bereitgestellten Zuflusses an Isolierflüssigkeit optional oder vorzugsweise die Temperatur der Isolierflüssigkeit aufweist, die die Isolationskammer verlässt.

5. Der Drehflügler eines der vorhergehenden Drehflügler-Ansprüche, wobei:
das ECS darüberhinaus eine zweite Flüssigkeitsleitung (330) und ein Kühlmittel umfasst, das durch die zweite Flüssigkeitsleitung fließt;
das Flüssigkeitssystem darüberhinaus einen Zufluss von Isolierflüssigkeit in eine zweite Isolationskammer (322) einleiten kann, die mindestens teilweise die zweite Flüssigkeitsleitung von den Umgebungsbedingungen außerhalb des ECS trennt; und
der Kondensationsteuerungsmotor (230) dem Flüssigkeitssystem darüberhinaus angibt, den Zufluss der Isolierflüssigkeit in die zweite Isolationskammer bei einer bestimmten Temperatur einzuleiten, so dass die Temperatur des Zuflusses an Isolierflüssigkeit, die die zweite Isolationskammer verlässt, höher ist als die Taupunkt-Temperaturmessung.

6. Der Drehflügler in Anspruch 5, wobei das Flüssigkeitssystem darüberhinaus aus Folgendem besteht:
einem ersten Ventil (310), das einen Zufluss an Isolierflüssigkeit bei einer Temperatur einleiten kann, die höher liegt als die Taupunkt-Temperaturmessung;
einem zweiten Ventil (324), das mindestens einen Teil des Zuflusses der Isolierflüssigkeit vom ersten Ventil aufnehmen kann und mindestens einen Teil des empfangenen Zuflusses bei einer bestimmten Temperatur in die Isolationskammer leiten kann, so dass die Temperatur der Isolierflüssigkeit, die die Isolationskammer verlässt, höher ist als die Taupunkt-Temperaturmessung; und
einem dritten Ventil, das mindestens einen Teil des Zuflusses an Isolierflüssigkeit vom ersten Ventil aufnehmen kann und mindestens einen Teil des empfangenen Zuflusses bei einer bestimmten Temperatur in die Isolationskammer leiten kann, so dass die Temperatur der Isolierflüssigkeit, die die zweite Isolationskammer verlässt, höher ist als die Taupunkt-Temperaturmessung.

7. Der Drehflügler in Anspruch 6, wobei das erste Ventil (310) den Zufluss an Isolierflüssigkeit bei einer Temperatur einleiten kann, die höher liegt als die Taupunkt-Temperaturmessung, plus eines ersten Toleranzwertes; und/oder wobei das zweite Ventil mindestens einen Teil des empfangenen Zuflusses bei einer bestimmten Temperatur in die Isolationskammer leiten kann, so dass die Temperatur der Isolierflüssigkeit, die die Isolationskammer verlässt, höher ist als die Taupunkt-Temperaturmessung, plus eines zweiten Toleranzwertes, der zweite Toleranzwert muss dabei niedriger sein als der erste Toleranzwert.

8. Der Drehflügler eines der vorhergehenden Drehflügler-Ansprüche oder das System eines der vorhergehenden System-Ansprüche, wobei das Flüssigkeitssystem den Zufluss der Isolierflüssigkeit in folgender Weise bereitstellen kann:
durch Empfang einer ersten Flüssigkeit von einer ersten Flüssigkeitsquelle (312) bei einer ersten Temperatur;
durch Empfang einer zweiten Flüssigkeit von einer zweiten Flüssigkeitsquelle (314) bei einer zweiten Temperatur, die höher liegt als die erste Temperatur; und
durch Mischung mindestens eines Teils der ersten Flüssigkeit und der zweiten Flüssigkeit, so dass die Temperatur der gemischten Flüssigkeit die Vorgaben des Kondensationssteuerungsmotors erfüllt.

9. Der Drehflügler in Anspruch 8, wobei die erste Flüssigkeitsquelle (312) das ECS ist; und/oder die zweite Flüssigkeitsquelle (314) das Antriebssystem ist.

10. Der Drehflügler eines der vorhergehenden Drehflügler-Ansprüche oder das System eines der vorhergehenden System-Ansprüche, wobei das Kühlmittel Luft ist.

11. Ein Verfahren zur Steuerung der Kondensation in einem Umgebungssteuerungssystem (ECS), das ECS bestehend aus einer Flüssigkeitsleitung und einem Kühlmittel, das durch die Flüssigkeitsleitung fließt, das Verfahren bestehend aus:
der Messung (410) einer Taupunkttemperatur der Umgebungsbedingungen außerhalb des ECS;
der Bereitstellung (420) eines Zuflusses an Isolierflüssigkeit in eine Isolationskammer, die mindestens teilweise die Flüssigkeitsleitung von den Umgebungsbedingungen außerhalb des ECS trennt;
der Messung (430) einer Temperatur der Isolierflüssigkeit, die die Isolationskammer verlässt; und
der Einstellung (440), wenn die Temperatur der Isolierflüssigkeit, die die Isolationskammer verlässt, nicht höher ist als die Taupunkt-Temperaturmessung, einer Temperatur der Isolierflüssigkeit, die in die Isolationskammer geleitet wird, so dass die Temperatur der Isolierflüssigkeit, die die Isolationskammer verlässt, höher liegt als die Taupunkt-Temperaturmessung.

12. Das Verfahren in Anspruch 11, wobei die Einstellung der Temperatur der Isolierflüssigkeit, die in die Isolationskammer geleitet wird, die Einstellung, der Temperatur der Isolierflüssigkeit, die in die Isolationskammer geleitet wird, umfasst, wenn die Temperatur der Isolierflüssigkeit, die die Isolationskammer verlässt, nicht höher liegt als die Taupunkt-Temperaturmessung, plus eines Toleranzwertes, so dass die Temperatur der der Isolierflüssigkeit, die die Isolationskammer verlässt, höher ist als die Taupunkt-Temperaturmessung, plus eines Toleranzwertes.

13. Das Verfahren in Anspruch 11 oder 12, darüberhinaus bestehend aus der Absenkung der Temperatur des bereitgestellten Zuflusses an Isolierflüssigkeit, so dass:
i) die Temperatur der Isolierflüssigkeit, die die Isolationskammer verlässt, näher bei der Temperatur der Kühlflüssigkeit liegt und;
ii) der bereitgestellte Zufluss an Isolierflüssigkeit immer noch eine bestimmte Temperatur aufweist, so dass die Temperatur der Isolierflüssigkeit, die die Isolationskammer verlässt, höher liegt als die Taupunkt-Temperaturmessung.

14. Das Verfahren in Anspruch 13, wobei der bereitgestellte Zufluss an Isolierflüssigkeit immer noch eine bestimmte Temperatur aufweist, so dass die Temperatur der Isolierflüssigkeit, die die Isolationskammer verlässt, höher liegt als die Taupunkt-Temperaturmessung, plus eines Toleranzwertes.

## Revendications

1. Un système de régulation de condensation (200) comprenant :
un analyseur de point de rosée (210) conçu de façon à fournir une mesure de température de point de rosée de conditions environnementales à l'extérieur d'un conduit de fluide (330) contenant un fluide de refroidissement s'écoulant dans celui-ci,
un système fluidique (300) conçu de façon à fournir un flux de fluide isolant à une chambre d'isolation (322) séparant au moins partiellement le conduit de fluide (330) des conditions environnementales à l'extérieur du conduit de fluide, et
un moteur de régulation de condensation (230) conçu de façon à ordonner au système fluidique (300) de fournir le flux de fluide isolant à la chambre d'isolation (322) à une température telle que la température du fluide isolant sortant de la chambre d'isolation soit supérieure à la mesure de température de point de rosée.

2. Un giravion (100), comprenant:
un corps (130),
un groupe motopropulseur couplé au corps et comprenant une source d'énergie et un arbre de transmission couplé à la source d'énergie,
un système de rotor principal (110) couplé au groupe motopropulseur, le système de rotor principal comprenant au moins une pale de rotor principale (120),
un moyeu,
une pale de rotor (120) couplée au moyeu,
un système de régulation climatique (ECS) couplé au corps et comprenant un conduit de fluide (330) et un fluide de refroidissement s'écoulant au travers du conduit de fluide, et
un système de régulation de condensation (200) selon la Revendication 1.

3. Le giravion selon la Revendication 2 ou le système selon la Revendication 1, où le moteur de régulation de condensation (230) est conçu de façon à ordonner au système fluidique de fournir le flux de fluide isolant à la chambre d'isolation (322) à une température telle que la température du fluide isolant sortant de la chambre d'isolation soit supérieure à la mesure de température de point de rosée plus une valeur de marge.

4. Le giravion selon l'une quelconque des Revendications de giravion précédentes, ou le système selon l'une quelconque des Revendications de système précédentes, où le moteur de régulation de condensation (230) est conçu en outre de façon à ordonner au système fluidique de baisser la température du flux de fluide isolant fourni de sorte que :
i) La température du flux de fluide isolant fourni soit plus proche de la température du fluide de refroidissement, et
ii) Le flux de fluide isolant fourni est toujours à une température telle que la température du fluide isolant sortant de la chambre d'isolation soit supérieure à la mesure de température de point de rosée, où la température du flux de fluide isolant fourni est éventuellement ou de préférence la température du fluide isolant sortant de la chambre d'isolation.

5. Le giravion selon l'une quelconque des Revendications de giravion précédentes où :
le ECS comprend en outre un deuxième conduit de fluide (330) et un fluide de refroidissement s'écoulant au travers du deuxième conduit de fluide,
le système fluidique est conçu en outre de façon à fournir un flux de fluide isolant à une deuxième chambre d'isolation (322) séparant au moins partiellement le deuxième conduit de fluide de conditions environnementales à l'extérieur du ECS, et
le moteur de régulation de condensation (230) est conçu en outre de façon à ordonner au système fluidique de fournir le flux de fluide isolant à la deuxième chambre d'isolation à une température telle que la température du flux de fluide isolant sortant de la deuxième chambre d'isolation soit supérieure à la mesure de température de point de rosée.

6. Le giravion selon la Revendication 5, le système fluidique comprenant en outre :
une première soupape (310) conçue de façon à fournir un flux de fluide isolant à une température supérieure à la mesure de température de point de rosée,
une deuxième soupape (324) conçue de façon à recevoir au moins une partie du flux de fluide isolant provenant de la première soupape et à fournir au moins une partie du flux reçu à la chambre d'isolation à une température telle que la température du fluide isolant sortant de la chambre d'isolation soit supérieure à la mesure de température de point de rosée, et
une troisième soupape conçue de façon à recevoir au moins une partie du flux de fluide isolant provenant de la première soupape et à fournir au moins une partie du flux reçu à la deuxième chambre d'isolation à une température telle que la température du fluide isolant sortant de la deuxième chambre d'isolation soit supérieure à la mesure de température de point de rosée.

7. Le giravion selon la Revendication 6, où la première soupape (310) est conçue de façon à fournir le flux de fluide isolant à une température supérieure à la mesure de température de point de rosée plus une première valeur de marge, et/ou où la deuxième soupape est conçue de façon à fournir au moins une partie du flux reçu à la chambre d'isolation à une température telle que la température du fluide isolant sortant de la chambre d'isolation soit supérieure à la mesure de température de point de rosée plus une deuxième valeur de marge, la deuxième valeur de marge étant inférieure à la première valeur de marge.

8. Le giravion selon l'une quelconque des Revendications de giravion précédentes, ou le système selon l'une quelconque des Revendications de système précédentes, où le système fluidique est conçu de façon à fournir le flux de fluide isolant par :
la réception d'un premier fluide à partir d'une première source de fluide (312) à une première température,
la réception d'un deuxième fluide à partir d'une deuxième source de fluide (314) à une deuxième température supérieure à la première température, et
le mélange d'au moins une partie du premier fluide et du deuxième fluide de sorte que la température du fluide mélangé satisfasse les instructions fournies par le moteur de régulation de condensation.

9. Le giravion selon la Revendication 8 où la première source de fluide (312) est le ECS et/ou la deuxième source de fluide (314) est le groupe motopropulseur

10. Le giravion selon l'une quelconque des Revendications de giravion précédentes, ou le système selon l'une quelconque des Revendications de système précédentes, où le fluide de refroidissement est de l'air.

11. Un procédé de régulation de la condensation dans un système de régulation climatique (ECS), le ECS comprenant un conduit de fluide et un fluide de refroidissement s'écoulant au travers du conduit de fluide, le procédé comprenant :
la mesure (410) d'une température de point de rosée de conditions environnementales à l'extérieur du ECS,
la fourniture (420) d'un flux de fluide isolant à une chambre d'isolation séparant au moins partiellement le conduit de fluide de conditions environnementales à l'extérieur du ECS,
la mesure (430) d'une température du fluide isolant sortant de la chambre d'isolation, et
l'ajustement (440), si la température du fluide isolant sortant de la chambre d'isolation n'est pas supérieure à la mesure de température de point de rosée, d'une température du fluide d'isolation fournie à la chambre d'isolation de sorte que la température du fluide isolant sortant de la chambre d'isolation soit supérieure à la mesure de température de point de rosée.

12. Le procédé selon la Revendication 11, où l'ajustement de la température du fluide d'isolation fournie à la chambre d'isolation comprend l'ajustement, si la température du fluide isolant sortant de la chambre d'isolation n'est pas supérieure à la mesure de température de point de rosée plus une valeur de marge, de la température du fluide d'isolation fournie à la chambre d'isolation de sorte que la température du fluide isolant sortant de la chambre d'isolation soit supérieure à la mesure de température de point de rosée plus une valeur de marge.

13. Le procédé selon la Revendication 11 ou 12, comprenant en outre l'abaissement de la température du flux de fluide isolant fourni de sorte que :
i) La température du fluide isolant sortant de la chambre d'isolation soit plus proche de la température du fluide de refroidissement, et
ii) Le flux de fluide isolant fourni étant toujours à une température telle que la température du fluide isolant sortant de la chambre d'isolation soit supérieure à la mesure de température de point de rosée.

14. Le procédé selon la Revendication 13, où le flux de fluide isolant fourni est toujours à une température telle que la température du fluide isolant sortant de la chambre d'isolation soit supérieure à la mesure de température de point de rosée plus une valeur de marge.
